# EUROPÄISCHE PATENTSCHRIFT

(11) **EP 3 543 626 B1**
(45) Veröffentlichungstag und Bekanntmachung des Hinweises auf die Patenterteilung: **12.08.2020**
(21) Anmeldenummer: 19000131.3
(22) Anmeldetag: 18.03.2019
(51) Int. Cl.: F25B 15/06, F25B 25/00, F28D 3/00, F28D 9/00

(54) **WASSER-LITHIUMBROMID-ABSORPTIONSKÄLTEANLAGE**
WATER-LITHIUM BROMIDE ABSORPTION COOLING SYSTEM
INSTALLATION FRIGORIFIQUE À ABSORPTION EAU-LITHIUM

(30) Priorität: 19.03.2018 DE 102018002201
(43) Veröffentlichungstag der Anmeldung: 25.09.2019
(73) Patentinhaber: EAW Energieanlagenbau GmbH, 98630 Römhild (DE); INSTITUT FÜR LUFT- UND KÄLTETECHNIK GEMEINNÜTZIGE GESELLSCHAFT mbH, 01309 Dresden (DE)
(72) Erfinder: Kemmerzehl, Christian, D-98530 Dillstädt (DE); Otto, Mike, D-98631 Grabfeld / OT Jüchsen (DE); Richter, Lutz, D-01309 Dresden (DE); Safarik, Mathias, D-01099 Dresden (DE)
(74) Vertreter: Weihrauch, Frank

(56) Entgegenhaltungen:
- EP-A1- 2 682 703
- WO-A1-2006/018216
- WO-A2-2008/108724
- WO-A2-2011/074963
- CN-A- 107 062 978

## Beschreibung

Die vorliegende Erfindung betrifft eine Wasser-Lithiumbromid-Absorptionskälteanlage, mit einem Verdampfer, einem Absorber, einem Generator und einem Kondensator, sowie mit einem Lösungswärmeüberträger. Im Generator verdampft das Kältemittel aus einem Arbeitsstoffpaar unter Aufnahme von Wärme. Im Absorber wird der Kältemitteldampf durch das kältemittelarme Arbeitsstoffpaar Wasser-Lithiumbromid-Lösung absorbiert. Dieser Lösungskreislauf stellt einen thermischen Verdichter dar.

Wasser-Lithiumbromid-Absorptionskälteanlagen werden im Stand der Technik als geschlossene Anlagen im Grobvakuum betrieben. Die LiBr-Lösung ist in Anwesenheit von Sauerstoff hochkorrosiv.

Der Betrieb der Wasser-Lithiumbromid-Absorptionskälteanlagen verläuft in einem Kreisprozess. Die LiBr-Salzlösung wird dabei im Stand der Technik in luftdicht verschlossenen Behältern über den Rohren von den in diesen Behältern angeordneten Rohrwärmeübertragern verrieselt.

In diesem Kreisprozess nimmt eine kältemittelreiche Lösung auf einem Hochdruckniveau in einem Generator zunächst derart Wärme auf, dass das Kältemittel gasförmig entweicht, wobei in einem separat angeschlossenen Lösungswärmeübertrager die erwärmte kältemittelarme Lösung Wärme an die, im Kreisprozess den Lösungswärmeübertrager ebenfalls durchströmende, kältemittelreiche Lösung überträgt. Die kältemittelarme Lösung wird nach Durchströmen des Lösungswärmeübertragers auf ein Niederdruckniveau entspannt und in einen Absorber eingeleitet.

In diesem Absorber wird das aus dem Verdampfer kommende Kältemittel wieder in der kältemittelarmen Lösung gelöst, die dadurch wiederhergestellte kältemittelreiche Lösung wird nachfolgend auf das Hochdruckniveau gepumpt und verdichtet, und anschließend, wie oben erläutert, in den Lösungswärmeübertrager eingeleitet und wieder zum Generator gefördert.

Das entwichene Kältemittel wird, damit es wieder in der kältemittelarmen Lösung gelöst werden kann, zunächst in einem Kondensator verflüssigt, nachfolgend auf das Niederdruckniveau entspannt und anschließend in einem Verdampfer unter Aufnahme von Wärme verdampft.

Durch diesen Kreisprozess wird im Verdampfer eine kontinuierliche Wärmeaufnahme bewirkt, die die Bereitstellung einer kontinuierlichen Kühlleistung, beispielsweise für Klimaanlagen, an einen den Verdampfer durchströmenden Kaltwasserkreislauf gewährleistet.

Im Stand der Technik werden unterschiedliche Bauformen von Wasser-Lithiumbromid-Absorptionskälteanlagen vorbeschrieben.

So ist aus WO 2006 018 216 A1 eine solche Absorptionskälteanlage mit einem an einen Klimakaltwasserkreislauf angeschlossenen, in einem Verdampfer angeordneten Wärmeübertrager bekannt. WO 2006 018 216 A1 offenbart eine Wasser-Lithiumbromid-Absorptionskälteanlage gemäß dem Oberbegriff des Anspruchs 1. Charakteristisch für diese in der WO 2006 018 216 A1 offenbarte Bauform ist, dass, wie allgemein im Stand der Technik bei derartigen Absorptionskältemaschinen üblich, alle in den beiden Arbeitsbehältern angeordneten Wärmeübertrager, also der Wärmeübertrager im Verdampfer, der Wärmeübertrager im Absorber, der Wärmeübertrager im Kondensator, wie auch der Wärmeübertrager im Generator als Rohrbündelwärmeübertrager ausgeführt sind. Oberhalb der Rohrbündel des Rohrbündelwärmeübertragers des Verdampfers, des Absorbers und des Generators sind, wie im Stand der Technik üblich, Berieselungseinrichtungen zur gleichmäßigen, wohldosierten Berieselung der Rohrbündel angeordnet, um so eine hohe Benetzung und einen hohen Wärmeübergang im Wärmeübertrager zu gewährleisten. Unterhalb der genannten Rohrwärmeübertrager sind Auffangwannen angeordnet, in denen das am jeweiligen Rohrwärmeübertrager verbliebene, nicht verdampfte, flüssige Arbeitsmittel aufgefangen und von dort weitergeleitet wird. Derartige mit Wärmeübertragern ausgestattete Absorptionskälteanlagen erfordern neben einem hohen Fertigungsaufwand viel Material, zwangsläufig einen relativ großen Bauraum und haben zudem ein sehr hohes Gewicht.

In der DE 10 2012 107 381 A1 wird eine aus Plattenwärmeübertragern aufgebaute Absorptionskälteanlage vorbeschrieben, bei der ein spezieller Plattenwärmeübertrager Einsatz findet, bei dem die im Wechsel angeordneten Lösungskanäle und Kühlmittelkanäle mit Hilfe von aus zwei Plattenteilen bestehenden Wärmeübertragerplatten zweiteilig ausgebildet werden. Hierbei sind in dem zwischen zwei Plattenvorderseiten vorhandenen Strömungskanal zwei nebeneinander liegende, getrennte, jedoch durch eine Überströmung verbundene Lösungskanalteile angeordnet. Ferner sind in dem benachbarten Strömungskanal zwei nebeneinander liegende, getrennte Kühlmittelkanalteile vorhanden. Jedem Kanalteil sind Ein- und Auslässe für das jeweilige Medium zugeordnet. Aufgrund der Überströmöffnung zwischen den beiden Lösungskanalteilen kann der in dem einen, dem als Verdampfer beziehungsweise Generator fungierenden, Lösungskanalteil erzeugte Dampf in den zweiten Lösungskanalteil strömen, der dann die Funktion eines Absorbers beziehungsweise eines Kondensators hat. Dadurch kann bei deutlich verringertem Platzbedarf der apparative Aufwand wie auch der Montageaufwand gesenkt und die Wärmeübertragungskapazität der Plattenwärmeübertrager erhöht werden. Diese Bauform hat jedoch den Nachteil, dass in den Übertrittsflächen des Dampfes, also in der Plattenmitte, Lösung von dem Generator in den Kondensator beziehungsweise Kältemittelflüssigkeit vom Verdampfer in den Absorber mitgerissen wird, wodurch die Funktion und die Effektivität der so aufgebauten Absorptionskälteanlage sehr stark negativ beeinflusst wird.

Aus der WO 2008 108 724 A2 ist ein asymmetrischer Plattenwärmeübertrager bekannt, bei dem zwei Medien über Wärmeaustauschflächen Wärme übertragen, wobei ein erster Durchflusskanal einen größeren Querschnitt als ein zweiter Durchflusskanal aufweist, so dass der Volumenstrom des ersten Mediums im ersten Durchflusskanal größer ist als der Volumenstrom des zweiten Mediums im zweiten Durchflusskanal.

Auch aus der EP 2 267 391 A2 ist ein gelöteter asymmetrischer Plattenwärmeübertrager bekannt, der sowohl für die kleineren Strömungskanäle, als auch für die größeren Strömungskanäle eine Druckhandhabungsfähigkeit aufweist, die dem eines gelöteten symmetrischen Plattenwärmeübertragers entspricht.

Die WO 2010 024 750 A1 offenbart einen weiteren asymmetrischen Plattenwärmeübertrager, welcher die Temperaturverluste in die Umgebung, also nach außerhalb des Plattenwärmeübertragers reduziert, aber im Vergleich zu den nach herkömmlicher Technologie hergestellten Plattenwärmeübertragern sehr kostenintensiv herzustellen ist.

Aus der WO 2015 001 506 A1 ist zudem ein weiterer asymmetrischer Plattenwärmeübertrager bekannt, bei dem zwischen den Hauptkanälen zusätzliche Verbindungskanäle angeordnet sind, um Wege mit unterschiedlichen Druckverlusten zu schaffen, und um dadurch in mindestens einem der Strömungskanäle die Turbulenz der Strömung zu erhöhen.

In EP 2 682 703 A1 wird zudem eine Platte für einen offenen asymmetrischen Plattenwärmeübertrager mit einem verbesserten primären und sekundären Wärmeaustausch vorbeschrieben. Offene asymmetrische Plattenwärmeübertrager zeichnen sich dadurch aus, dass die Kanäle mit größerem Durchströmungsquerschnitt bei größerer Kanalhöhe nach außen offen sind. Die Kanäle sind dabei zumindest entweder oben und unten offen und können zudem auch seitlich offen sein. Mit dieser in EP 2 682 703 A1 offenbarten Lösung wird eine spezielle Platte für einen offenen asymmetrischen Plattenwärmeübertrager bereitgestellt, mittels welcher eine größere Wärmeübertragungsfläche für das erste Medium, das Medium mit dem kleineren Wärmeübertragungskoeffizienten, geschaffen wird. Beim Einsatz des Plattenwärmeübertragers, beispielsweise in einer Kühlvitrine, durchfließt das erste Medium, die Luft, den Plattenwärmeübertrager mit einer anderen Geschwindigkeit als das zweite Medium, das Wasser. Wie auch in EP 2 682 703 A1 beschrieben besitzen die Platten der offenen asymmetrischen Plattenwärmeübertrager zur Gewährleistung der Stabilität und gleichzeitig zur Verbesserung der Wärmeübertragungs- und Strömungsbedingungen Prägungen und Profilierungen die, nachdem mehrere Platten gestapelt angeordnet und miteinander typischerweise durch Löten verbunden wurden, zwei getrennte Strömungswege für zwei unterschiedliche Medien im jeweiligen Plattenwärmeübertrager ausbilden.

Aus der WO 2015 055 159 A1 ist eine Ammoniak-Wasser-Absorptionskältemaschine bekannt, die ebenfalls mit einem Austreiber/Generator als erste Komponente, einem Kondensator als zweite Komponente, einem Verdampfer als dritte Komponente und einem Absorber zur Absorption von Kältemitteldampf im Lösungsmittel als vierte Komponente arbeitet, und die sich dadurch auszeichnet, dass zumindest eine dieser Komponenten für sich, oder in Kombination mit zumindest einer weiteren Komponente, als Plattenwärmeübertrager ausgebildet ist. Diese in der WO 2015 055 159 A1 vorbeschriebene Absorptionskältemaschine arbeitet wie erwähnt mit dem Arbeitsstoffpaar Ammoniak - Wasser. Hierbei sind Plattenwärmeübertrager mit asymmetrischer Kanalausführung vorgesehen, also solche, bei denen die Strömungskanäle unterschiedlich große Durchströmungsquerschnitte aufweisen. Charakteristisch für Ammoniak-Wasser-Absorptionskältemaschinen ist, dass diese nicht wie Wasser-Lithiumbromid-Absorptionskälteanlagen mit Unterdruck, sondern im Gegenteil mit Überdruck arbeiten.
Auf Grund der damit verbundenen, völlig anderen verfahrenstechnischen Randbedingungen, hätte jede Anwendung von Lösungen für Ammoniak-Wasser-Absorptionskältemaschinen auf Wasser-Lithiumbromid-Absorptionskälteanlagen völlig andere technische Auswirkungen auf den jeweiligen Gesamtprozess, wodurch sowohl die Funktion wie auch die Effektivität einer solchen Absorptionskälteanlage sehr stark beeinträchtigt werden würden.

Weitere technische Probleme von Wasser-Lithiumbromid-Absorptionskälteanlagen, beruhen darauf, dass diese prinzipbedingt im Grobvakuum arbeiten. Diese Anlagen müssen zwangsläufig mit einem wirtschaftlich vertretbaren Aufwand gefertigt werden und sind daher nie vollkommen vakuumdicht.
In der Praxis kommt es auch bei den heute für den industriellen Einsatz gefertigten Wasser-Lithiumbromid-Absorptionskälteanlagen, in denen zumeist Rohrwärmeübertrager eingesetzt werden, die mit hohem Materialeinsatz, hohem Gewicht, hohem Platzbedarf in voluminöser Bauform mit hohem Fertigungs-, Montage- und Instandhaltungsaufwand hergestellt werden, zu diesen fertigungs- oder montagebedingten Undichtheiten an den Behältern, und damit zwangsläufig stets zu Lufteintritten von außen in die Behälter.

Diese in die Behälter eingetretene Luft wird bei den Wasser-Lithiumbromid- Absorptionskälteanlagen als Inertgas bezeichnet, und hat mit zunehmender Betriebsdauer, auf Grund der stetig in die Behälter eintretenden Luft, eine immer größer werdende negative Auswirkung auf den Kreisprozess und beeinträchtigt, insbesondere durch die Behinderung der Wärme- und Stoffübergänge, die gesamte Anlagenfunktion so stark, dass der Anlagenwirkungsgrad und damit die Kälteleistung der Absorptionskälteanlage unter einen nicht mehr vertretbaren Grenzwert sinkt. Dann muss die Wasser-Lithiumbromid-Absorptionskälteanlage zwingend turnusmäßig abgeschaltet und mit Nachlauf kontrolliert heruntergefahren werden.
Nach dem Abkühlen, damit der Wasserdampf die Vakuumpumpen nicht beschädigt, werden dann die Behälter mittels Vakuumpumpen evakuiert. Dies ist in vielen Anwendungsfällen sehr nachteilig, da seitens der Anwender eine stetige Anlagenverfügbarkeit gefordert wird. Um ein turnusgemäßes Abschalten der Anlagen zu vermeiden, werden im Stand der Technik Hilfsabsorber und Hilfskondensatoren eingesetzt, die eine Evakuierung während des Betriebes ermöglichen. Eine optimale Evakuierung während des Betriebes wird jedoch im Stand der Technik dadurch erschwert, dass im Betriebszustand der Anlage die Inertgase durch die Dampfströmung in den Rohrbündelwärmeübertragern stetig umverteilt werden, so dass sich die Inertgase nicht an definierten Stellen in der Anlage konzentriert ansammeln, von wo dann ausschließlich die Inertgase exakt und definiert abgesaugt werden könnten.
Die zur Evakuierung in die jeweiligen Anlagen zusätzlich in die Anlagen zu integrierenden Baugruppen, wie Hilfsabsorber oder Hilfskondensatoren, sind sehr kostenintensiv und erfordern neben dem zusätzlichen Fertigungs-, Montage- und Instandhaltungsaufwand auch noch einen entsprechend großen, zusätzlichen Bauraum.
In Verbindung mit dem Ersatz von Rohrwärmeübertragern durch Plattenwärmeübertrager werden zwangsläufig deutlich kleinere Behälter angestrebt, welche jedoch dann den Nachteil haben, dass auf Grund des geringeren Behältervolumens sich die in die Behälter eingetretenen Inertgase schneller negativ auswirken. Gegenüber den Evakuierungszyklen bei Einsatz von großen Behältern müssen bei Einsatz von kleineren Behältern die Evakuierungszyklen deutlich verkürzt werden um zu vermeiden, dass der Anlagenwirkungsgrad und die Anlagenverfügbarkeit so stark sinken, dass ein wirtschaftlicher Betrieb derartiger Anlagen nur mit einem sehr hohen Fertigungs- und/oder Instandhaltungsaufwand zu gewährleisten wäre.

Ausgehend vom Stand der Technik liegt der Erfindung die Aufgabe zugrunde, eine Wasser-Lithiumbromid-Absorptionskälteanlage zu entwickeln, die mit geringem Materialeinsatz, geringem Gewicht, geringem Platzbedarf, in kompakter Bauform und bei geringem Fertigungs-, Montage- und Instandhaltungsaufwand eine hohe Kälteleistung gewährleistet und die so ausgebildet werden kann dass sie sogar ohne aufwendige technische Hilfsmittel das Problem der Inertgasanfälligkeit bei Wasser-Lithiumbromid-Absorptionskälteanlagen löst, und so mit minimalem Aufwand bei hoher Zuverlässigkeit eine hohe Anlagenverfügbarkeit, insbesondere einen ununterbrochenen Dauerbetrieb, bei hohem Anlagenwirkungsgrad gewährleistet.

Erfindungsgemäß wird diese Aufgabe durch eine Wasser-Lithiumbromid-Absorptionskälteanlage nach den Merkmalen des Hauptanspruches der Erfindung gelöst. Vorteilhafte Ausführungen, Einzelheiten und Merkmale der Erfindung ergeben sich aus den Unteransprüchen sowie der nachfolgenden Beschreibung der erfindungsgemäßen Lösung in Verbindung mit den Darstellungen zu den Ausführungsbeispielen der erfindungsgemäßen Lösung.

Eine erfindungsgemäße Wasser-Lithiumbromid-Absorptionskälteanlage, nachfolgend auch verkürzt als die Kälteanlage bezeichnet, weist zunächst gattungsgemäß als vier Grundeinheiten einen Generator, einen Kondensator, einen Absorber und einen Verdampfer auf. Der Generator und der Kondensator sind in einem Hochdruckbehälter und der Verdampfer und Absorber in einem Niederdruckbehälter angeordnet.

Die Kälteanlage weist vier Wärmeübertrager auf, wobei der Generator den ersten Wärmeübertrager, der Kondensator den zweiten Wärmeübertrager, der Verdampfer den dritten Wärmeübertrager und der Absorber den vierten Wärmeübertrager aufweist.

Die Kälteanlage weist ferner einen Arbeitsstoff auf, der durch das Stoffpaar Wasser und Lithiumbromid gebildet wird, wobei es sich bei dem Wasser um das Kältemittel und bei dem Lithiumbromid um das Lösungsmittel, auch als Sorptionsmittel bezeichnet, handelt.

Die Grundkomponenten sind ausgebildet, einen kontinuierlichen Kreislaufprozess auszuführen und eine Kühlleistung bereitzustellen. Im Gegensatz zu einer Kompressionskälteanlage arbeitet der Kreislaufprozess mit einem sogenannten thermischen Verdichter.

Im Generator wird das Wasser als Kältemittel aus der Wasser-Lithiumbromidlösung unter Wärmeaufnahme ausgedampft. Die verbleibende konzentrierte, also kältemittelarme Wasser-Lithiumbromid-Lösung wird zum Absorber gefördert.

Das in dem Generator ausgedampfte dampfförmige Wasser als Kältemittel wird in den Kondensator geführt und in dem Kondensator unter Wärmeabgabe kondensiert und so wieder verflüssigt. Die abgegebene Kondensationswärme wird aus dem Kondensator abgeführt. Das verflüssigte Wasser wird über die Drossel entspannt und in den Verdampfer geführt.

In dem Verdampfer verdampft das Wasser als Kältemittel unter Wärmeaufnahme bei niedrigem Druck und damit bei niedrigen Temperaturen. Dadurch kann einem Kühlmedium Wärme entzogen werden. Hierdurch wird die Kühlleistung bereitgestellt.

Das dampfförmige Kältemittel, also Wasserdampf, aus dem Verdampfer wird in den Absorber überführt. In dem Absorber wird das dampfförmige Kältemittel von der aus dem Generator erhaltenen konzentrierten, kältemittelarmen Wasser-Lithiumbromid-Lösung absorbiert. Die nun wieder kältemittelreiche Wasser-Lithiumbromid-Lösung wird in den Generator zurückgeführt. Die frei werdende Wärme wird aus dem Absorber abgeführt.

Der beschriebene Lösungsmittelkreislauf, also der Kreislauf der Wasser-Lithiumbromid-Lösung zwischen dem Generator und dem Absorber unter Kältemittelaustreibung und Kältemittelabsorption, stellt den sogenannten thermischen Verdichter dar.

Ferner weist die Kälteanlage einen Lösungsmittelwärmeübertrager auf. Der Lösungsmittelwärmeübertrager unterscheidet sich grundlegend von den vier Wärmeübertragern der Grundeinheiten. Der Lösungsmittelwärmeübertrager ist nicht für den Kreislaufprozess erforderlich und keiner der vier Grundeinheiten zugeordnet. Der Lösungsmittelwärmeübertrager bewirkt eine Wärmerückgewinnung in dem Lösungsmittelkreislauf zwischen dem Generator und dem Absorber und erhöht so den Wirkungsgrad der Kälteanlage.

Die erfindungsgemäße Kälteanlage ist dadurch gekennzeichnet, dass alle vier Wärmeübertrager der Grundkomponenten als offene asymmetrische Plattenwärmeübertrager ausgebildet sind.

Nachfolgend wird die erfindungsgemäße Lösung anhand eines Ausführungsbeispiels in Verbindung mit acht zugeordneten Darstellungen näher erläutert.

Diese Darstellungen zeigen:
- Fig. 1:: ein Blockschaltbild der erfindungsgemäßen Wasser-Lithiumbromid-Absorptionskälteanlage;
- Fig. 2:: die erfindungsgemäße Wasser-Lithiumbromid-Absorptionskälteanlage in einer räumlichen Darstellung, mit dem Hochdruckbehälter 1 und dem unmittelbar darunter angeordneten Niederdruckbehälter 2, im auslieferungsfertigen Endmontagezustand;
- Fig. 3:: die Seitenansicht der erfindungsgemäßen Wasser-Lithiumbromid-Absorptionskälteanlage in einer Schnittdarstellung;
- Fig. 4:: einen 2-seitig offenen Plattenwärmeübertrager 30A in einer räumlichen Darstellung;
- Fig. 5:: den 2-seítig offenen, in der Figur 4 dargestellten Plattenwärmeübertrager 30A, im Betriebszustand, im Schnitt mit der Inertgasverteilung/ den Inertgasansammlungen 18 A;
- Fig. 6:: einen 4-seitig offenen Plattenwärmeübertrager 30B in einer räumlichen Darstellung;
- Fig. 7:: den 4-seitig offenen, in der Figur 6 dargestellten Plattenwärmeübertrager 30B im Betriebszustand, im Schnitt mit der Inertgasverteilung/ den Inertgasansammlungen 18B;
- Fig. 8:: einen erfindungsgemäßen Plattenwärmeübertrager 30 im Schnitt mit innenliegender Inertgasabsaugleitung 19 und einer oberhalb des Plattenwärmeübertragers 30 angeordneten Berieselungsvorrichtung 8.

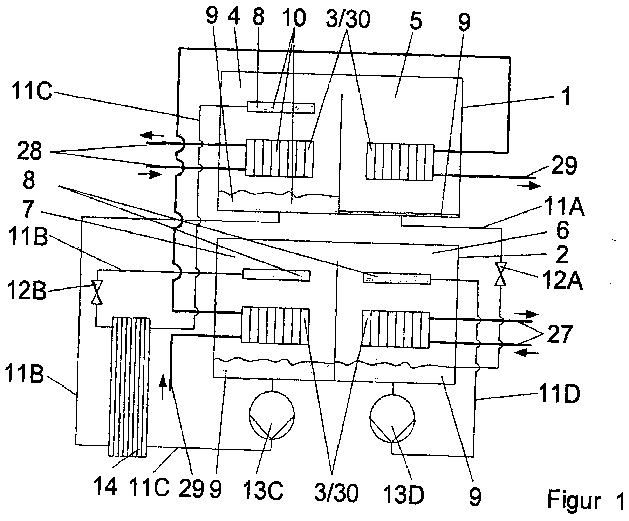

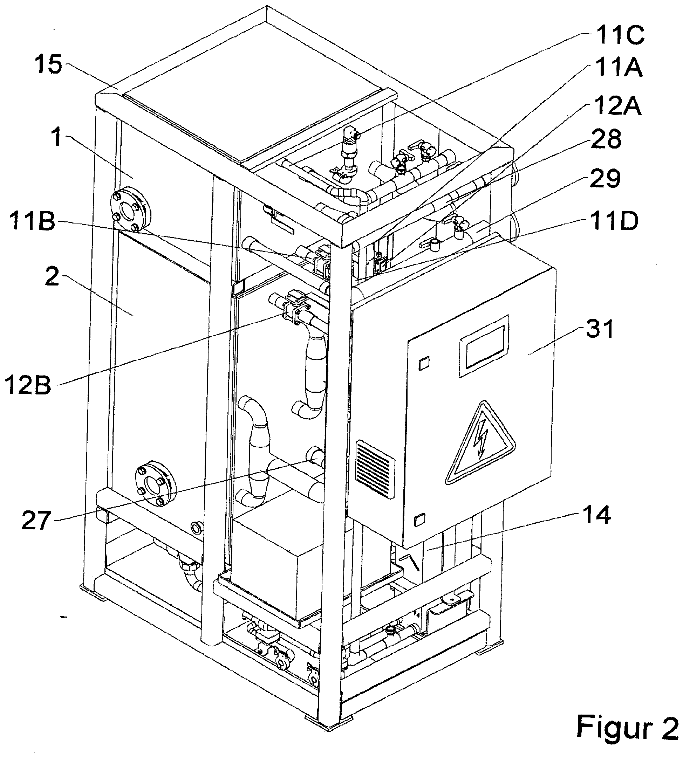

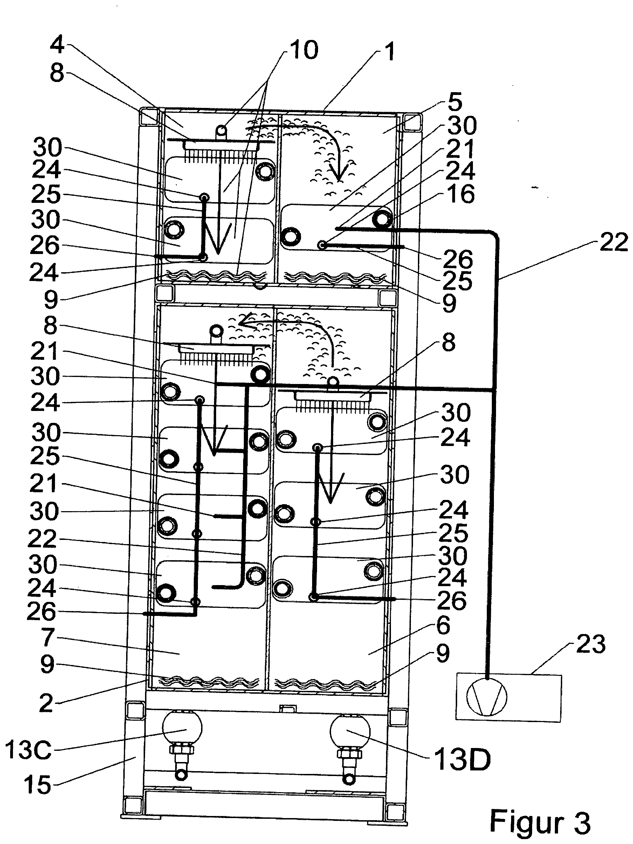

Das in der Figur 1 dargestellte Blockschaltbild zeigt die erfindungsgemäße Wasser-Lithiumbromid-Absorptionskälteanlage mit den Medienanschlussleitungen für jeweils einen Warmwasserkreislauf 28, einen Rückkühlwasserkreislauf 29 und einen Kaltwasserkreislauf 27.
Innerhalb der Wasser-Lithiumbromid-Absorptionskälteanlage wird in einem Kreisprozess ein Arbeitsstoff, bestehend aus einem Lösungsmittel und einem Kältemittel, in unterschiedlichen vom Kreisprozess jeweils abhängigen Mischungsverhältnissen geführt.
Die in der Figur 1 in einem Blockschaltbild, in der Figur 2 im auslieferungsfertigen Endmontagezustand und in der Figur 3 in der Seitenansicht im Schnitt dargestellte Wasser-Lithiumbromid-Absorptionskälteanlage besteht aus einem Hochdruckbehälter 1, in dem ein das Kältemittel unter Wärmezufuhr aus dem Lösungsmittel austreibender Generator 4, mit einem ersten Wärmeübertrager 3, und ein das ausgetriebene Kältemittel kondensierender Kondensator 5, mit einem zweiten Wärmeübertrager 3, und aus einem Niederdruckbehälter 2, mit einem das Kältemittel unter Wärmeentzug verdampfendem Verdampfer 6 mit einem dritten Wärmeübertrager 3, sowie einem Absorber 7 zur Absorption des im Verdampfer 6 verdampften Kältemittel im Lösungsmittel, mit einem vierten Wärmeübertrager 3, mit oberhalb des Wärmeübertragers 3 des Generators im Hochdruckbehälter 1, wie auch oberhalb der Wärmeübertrager 3 des Verdampfers 6 und auch des Absorbers 7 im Niederdruckbehälter 2 angeordneten Berieselungsvorrichtungen 8. Zudem sind im Hochdruckbehälter 1, unterhalb des Wärmeübertragers 3 im Generator 4 und unterhalb des Wärmeübertragers 3 des Kondensators 5, und auch im Niederdruckbehälter 2 unterhalb der Wärmeübertrager 3 des Verdampfers 6 und des Absorbers 7 Flüssigkeitsauffangwannen 9 angeordnet.
Mit der dem jeweiligen Wärmeübertrager 3 zugeordneten Berieselungsvorrichtung 8 und der dem jeweiligen Wärmeübertrager 3 zugeordneten Flüssigkeitsauffangwanne 9 bilden die Baugruppen Berieselungsvorrichtung 8, Wärmeübertrager 3 und Flüssigkeitsauffangwanne 9 gemeinsam jeweils einen Rieselfilmapparat 10 aus.

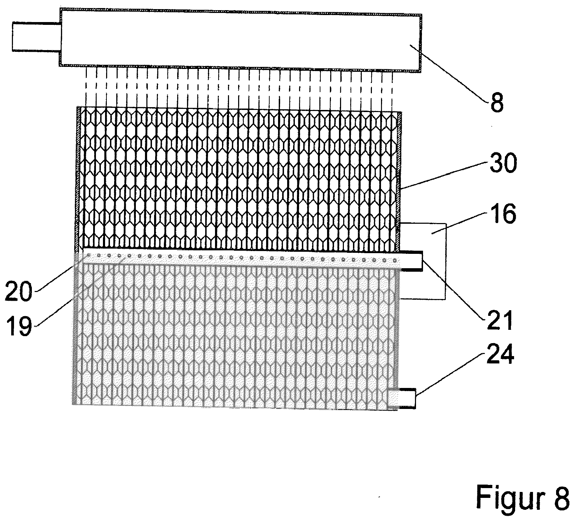

Erfindungswesentlich ist in diesem Zusammenhang, dass alle Wärmeübertrager 3, dies bedeutet sowohl der Wärmeübertrager 3 des Generators 4, der Wärmeübertrager 3 des Kondensators 5, der Wärmeübertrager 3 des Verdampfers 6 und auch der Wärmeübertrager 3 des Absorbers 7 zwingend als offene asymmetrische Plattenwärmeübertrager 30 ausgebildet sind.
Die erfindungsgemäß oberhalb der offenen asymmetrischen Plattenwärmeübertrager 30, wie in der Figur 8 dargestellt, angeordneten Berieselungsvorrichtungen 8 bewirken so eine vollständige und gleichmäßige Benetzung des jeweiligen offenen asymmetrischen Plattenwärmeübertragers 30 und gewährleisten dadurch einen sehr guten Wärme- und Stoffübergang.
Dabei wird erfindungsgemäß mit Massenströmen gearbeitet, welche sich in Form von Dampfströmungen 17 durch die jeweiligen Plattenwärmeübertrager 30 bewegen und dabei entweder einen zweiseitig offenen Plattenwärmeübertrager 30A als Dampfströmung 17A von oben wie auch als Dampfströmung 17B von unten beaufschlagen, oder einen vierseitig offenen Plattenwärmeübertrager 30B als Dampfströmung 17A von oben und als Dampfströmung 17B von unten und zudem auch noch in Form von seitlichen Dampfströmungen 17C beaufschlagen.
Der dadurch optimal zu gewährleistende Wärme- und Stoffübergang erfolgt im jeweiligen Plattenwärmeübertrager 30 an die primärseitigen Medien, welche über Verbindungsstutzen 16 mit den außenliegenden Medienleitungen verbunden sind.

Zwischen der Flüssigkeitsauffangwanne 9 des Absorbers 7 und der Berieselungsvorrichtung 8 des Generators 4 ist eine Verbindungsleitung 11C mit Pumpe 13C angeordnet. Diese Verbindungsleitung 11C ist über einen zwischen dem Hochdruckbehälter 1 und dem Niederdruckbehälter 2 angeordneten Lösungsmittelwärmeüberträger 14 mit der Verbindungsleitung 11B in deren Bereich vor der Drossel 12B thermisch gekoppelt.

Dabei können die Verbindungsleitungen 11, in denen Drosseln 12 angeordnet sind, selbstverständlich auch derart dimensioniert/bemessen sein, dass die jeweilige Verbindungsleitung 11 selbst als Drossel 12 wirkt.

Darüber hinaus ist zwischen der Flüssigkeitsauffangwanne 9 des Verdampfers 6 und der Berieselungsvorrichtung 8 des Verdampfers 6 am Niederdruckbehälter 2 eine weitere Verbindungsleitung 11D mit einer weiteren Pumpe 13D angeordnet.

Wie in den Figuren 1 bis 3 dargestellt, zeichnet sich die erfindungsgemäße Wasser-Lithiumbromid-Absorptionskälteanlage insbesondere dadurch aus, dass sowohl im Verdampfer 6, im Absorber 7, als auch im Kondensator 5 und im Generator 4 als Wärmeübertrager 3 offene asymmetrische Plattenwärmeübertrager 30 eingesetzt sind, wobei die Dampfströmung 17 erfindungsgemäß so geführt wird, dass diese jeweils über die geöffneten Flächen in den jeweiligen offenen asymmetrischen Plattenwärmeübertrager 30 erfolgt.

Die erfindungsgemäße Lösung zeichnet sich in einer vorteilhaften Weiterbildung, wie in den Figuren 2 und 3 dargestellt, vorzugsweise dadurch aus, dass in einem eckigen Grundrahmen 15 der Hochdruckbehälter 1, der Niederdruckbehälter 2 wie auch alle zwischen diesen angeordneten Verbindungsleitungen 11 mit den in bzw. zwischen diesen angeordneten Bauteilen wie Drossel/n 12 und/oder Pumpen 13 angeordnet sind. Vorzugsweise weist die Kälteanlage Medienanschlüsse auch beispielsweise für die Stromversorgung der Pumpe/n und für Mess-, Steuer- und Regeleinrichtungen auf.
Durch diese Lösung kann die Absorptionskälteanlage erfindungsgemäß mit minimalem Montageaufwand in einer sehr kompakten Bauform, dies bedeutet bei minimalem Bauraum sogar in Schrankbauweise komplett vorgefertigt ausgeliefert werden, so dass vor einer Inbetriebnahme lediglich noch die Medienanschlussleitungen für jeweils den Warmwasserkreislauf 28, den Rückkühlwasserkreislauf 29 und den Kaltwasserkreislauf 27 montiert, und die Stromversorgung für die Pumpen 13 und die Mess-, Steuer- und Regeleinrichtungen angeschlossen werden müssen.

In einer ersten Ausbildung einer weiteren vorteilhaften Weiterbildung weist mindestens der in dem Niederdruckbehälter 2 angeordnete Plattenwärmeübertrager 30 des Absorbers 7 mindestens eine Inertgasabsaugleitung 19 auf.

In einer zweiten Ausbildung dieser weiteren vorteilhaften Weiterbildung weist mindestens der in dem Hochdruckbehälter 1 angeordnete Plattenwärmeübertrager 30 des Kondensators 5 mindestens eine Inertgasabsaugleitung 19 auf.

Weiterhin ist in beiden Ausbildungen dieser weiteren vorteilhaften Weiterbildung kennzeichnend, dass - wie in Figur 8 dargestellt - die in den Plattenwärmeübertragern 30 angeordneten Inertgasabsaugleitungen 19, mit den in diesen Inertgasabsaugleitungen 19 angeordneten Inertgasabsaugbohrungen 20, in einen oder mehrere Inertgasabsaugkanalanschlüsse 21 münden.

Wesentlich ist auch, dass der oder die Inertgasabsaugkanalanschlüsse 21 über eine oder mehrere Inertgasleitungen 22 mit einer oder mehreren Absaugvorrichtungen 23 verbunden sind, die während des Betriebes eine lokal exakt definierte Absaugung des Inertgases aus der Kälteanlage gewährleisten.
Wesentlich ist dabei, dass über diese Inertgasleitung oder Inertgasleitungen 22 während des Dauerbetriebs der erfindungsgemäßen Absorptionskälteanlage, mittels einer oder mehrerer Absaugvorrichtungen 23, beispielsweise in Form von Vakuumpumpen, mit minimalem Aufwand und in sehr geringer Betriebszeit eine zuverlässige, direkte, exakt lokal definierte Absaugung der Inertgase dort aus der erfindungsgemäßen Absorptionskälteanlage gewährleistet werden kann, wo diese sich konzentriert ansammeln.

Es wurde gefunden, dass eine direkte Absaugung der Inertgase möglich ist. Direkte Absaugung bedeutet erfindungsgemäß die Absaugung der Inertgase direkt aus dem Bereich der erfindungsgemäßen Absorptionskälteanlage, in dem sich die Inertgase erfindungsgemäß konzentrieren/ansammeln. Infolge dieser erfindungsgemäß möglichen direkten Absaugung sind erfindungsgemäß dadurch vorteilhaft auch lediglich kleine Absaugvolumenströme und kurze Betriebszeiten für die Absaugung erforderlich.

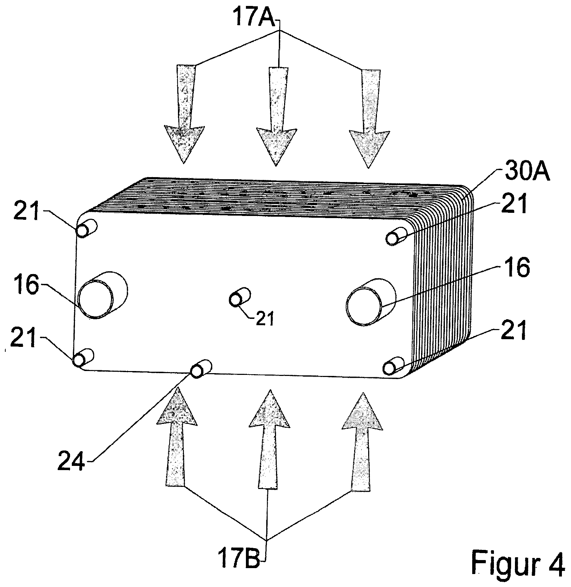

Wie in der Figur 3, einer Schnittdarstellung der erfindungsgemäßen Wasser-Lithiumbromid-Absorptionskälteanlage in der Seitenansicht, und zudem im Detail in den Figuren 4 bis 7, und insbesondere in Figur 8 in einer Schnittdarstellung der Seitenansicht eines erfindungsgemäßen Plattenwärmeübertragers 30 dargestellt, ist also wesentlich für diese Weiterbildung, dass in den Plattenwärmeübertragern 30 der erfindungsgemäßen Wasser-Lithiumbromid-Absorptionskälteanlage, und zwar in den im Niederdruckbehälter 2 angeordneten Plattenwärmeübertrager/n 30 des Absorbers 7, wie zudem auch in den im Hochdruckbehälter angeordneten Plattenwärmeübertrager/n 30 des Kondensators, Inertgasabsaugleitungen 19 mit Inertgasabsaugbohrungen 20 angeordnet sind.

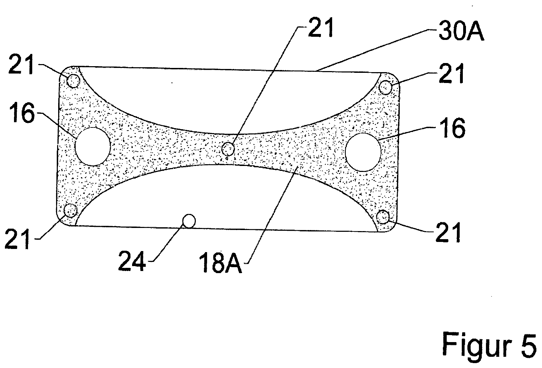

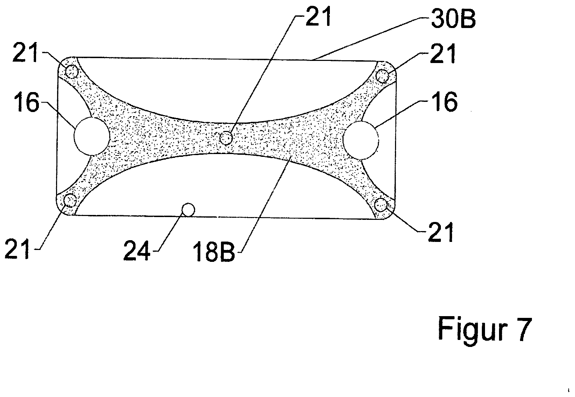

Im kontinuierlichen Arbeitsprozess kann so erfindungsgemäß im Rahmen der Prozessführung gewährleistet werden, dass sowohl das in den Hochdruckbehälter 1 mit einem Arbeitsinnendruck von ca. 0,05 bar (absolut), als auch in den Niederdruckbehälter 2 einem Arbeitsinnendruck von ca. 0,01 bar (absolut) eingetretene Inertgas gezielt an den sich definiert ausbildenden Inertgasansammlungen 18 abgesaugt werden kann.
Konkret kann das in den Hochdruckbehälter 1 eingetretene Inertgas, welches sich in den jeweils eingesetzten Plattenwärmeübertragern 30 (je nach eingesetztem Plattenwärmeübertragertyp 30A oder 30B / wie in den Figuren 5 oder 7 dargestellt) im Kondensator anreichert, wie auch das in den Niederdruckbehälter 2 eingetretene Inertgas, welches sich in den jeweils eingesetzten Plattenwärmeübertragern 30 (je nach eingesetztem Plattenwärmeübertragertyp 30A oder 30B / wie in den Figuren 5 oder 7 dargestellt) im Absorber 7 anreichert, gezielt von diesen sich erfindungsgemäß definiert ausbildenden Inertgasansammlungen 18, mittels der erfindungsgemäß in den Plattenwärmeübertragern 30, wie in Figur 8 dargestellt, angeordneten Inertgasabsaugleitungen 19 mit ihren Inertgasabsaugbohrungen 20, über die an den Plattenwärmeübertragern 30 angeordneten Inertgasabsaugkanalanschlüssen 21, und dann über die in der Figur 3 dargestellten, an den Inertgasabsaugkanalanschlüsse 21 angeordneten, Inertgasleitungen 22 mittels mindestens einer Absaugvorrichtung 23 abgesaugt werden.

In einer anderen optimierten Bauform sammeln sich in Verbindung mit einer gezielten Strömungsführung im Kondensator, dies bedeutet mit definierter Dampfströmung "nur von oben nach unten" die Inertgase des Hochdruckbehälters 1 erfindungsgemäß im Bereich der Flüssigkeitsauffangwanne 9 des Kondensators 5 an und werden von dort in die Verbindungsleitung 11A mit der als Expansionsventil wirkenden Drossel 12A eingesaugt und über die Flüssigkeitsauffangwanne 9 des Verdampfers 6 in den Niederdruckbehälter 2 ausgetragen.

In Verbindung mit einer solchen definierten Strömungsführung im Niederdruckbehälter 2 werden dann alle in die Kälteanlage eintretenden Inertgase mit der Dampfströmung 17 mittransportiert. Sie sammeln sich dadurch konzentriert, dies bedeutet vor/hinter und zwischen den Platten des/der Plattenwärmeübertrager/s 30 im Absorber 7 an. Sie können dann von dort mittels der in diesem Fall nur in dem/den Plattenwärmeübertrager/n 30 des Absorbers 7, im Niederdruckbehälter 2, beispielsweise wie in Figur 8 dargestellt, angeordneten Inertgasabsaugleitungen 19 mit Inertgasabsaugbohrungen 20, zuverlässig aus diesem Bereich vor/hinter und zwischen den Platten der Plattenwärmeübertrager 30 des Absorbers 7, lokal und geometrisch exakt definiert, mit der Absaugvorrichtung 23 erfindungsgemäß abgesaugt werden.
Erfindungswesentlich ist auch, dass sich die Inertgasansammlungen 18 in ihrer Lage innerhalb des Plattenwärmeübertragers 30 je nach Ausführung des Plattenwärmeübertragers 30 unterscheiden.

So bilden sich in zweiseitig offenen Plattenwärmeübertragern 30A die Inertgasansammlungen 18 "zentral", wie in Figur 5 dargestellt, als Inertgassammlung 18A vor/hinter und zwischen den Platten des Plattenwärmeübertragers 30A aus.

Bei vierseitig offenen Plattenwärmeübertragern 30B bilden sich die Inertgasanammlungen 18B im Gegensatz dazu "dezentral", wie in der Figur 7 dargestellt, vor/hinter und zwischen den Platten des Plattenwärmeübertragers 30B aus.

Erfindungswesentlich ist auch, dass an jedem Plattenwärmeübertrager 30, wie in den Figuren 3 bis 8 dargestellt, unten ein Entleerungsanschluss 24 für die externe Medienseite angeordnet ist, welcher mittig oder versetzt von der Mitte platziert ist, wobei alle Entleerungsanschlüsse 24 über Entleerungsleitungen 25 verbunden sind, die in Entleerungsanschlussstutzen 26 münden, welche am Hochdruckbehälter 1 und am Niederdruckbehälter 2 angeordnet sind. Dadurch wird bewirkt, dass bei frostgefährdeten Aufstellungen der erfindungsgemäßen Wasser- Lithiumbromid-Absorptionskälteanlage die externen Wasserkreisläufe vollständig entleert werden können, so dass eine "Frostaufstellung" der Anlage möglich ist.

Erfindungsgemäß ist auch, dass die Beaufschlagung der offenen asymmetrischen Plattenwärmeübertrager 30 mit dem Arbeitsstoff mittels einer Berieselungsvorrichtung 8 in der Bauform von Düsen, oder wie in der Figur 8 dargestellt, in der Bauform eines Verteilerkastens mit einem Lochblech erfolgt. Dadurch wird bewirkt, dass die offenen Plattenwärmeübertrager 30 als Rieselfilmapparat arbeiten und dadurch eine gute Benetzung der Wärme- und Stoffübertragerflächen gewährleistet ist.

Wesentlich ist zudem in einer fortführenden Weiterbildung, dass die Querschnittsflächen der Inertgasabsaugleitung 19 kleiner als die Querschnittsflächen der Verbindungsleitungen 11 bemessen sind. Dadurch wird als Vorteil unter anderem auch der Materialeinsatz reduziert.

Ferner sind alle Plattenwärmeübertrager 30 als zweiseitige offene asymmetrische Plattenwärmeübertrager 30A oder alle Plattenwärmeübertrager 30 als vierseitig offene asymmetrische Plattenwärmeübertrager, oder teilweise als zweiseitig und teilweise als vierseitig offene Plattenwärmeübertrager 30B ausgebildet. Bei der teilweise zweiseitig und teilweise vierseitig offenen asymmetrischen Ausbildung ist also von den vier Plattenwärmeübertragern 30 mindestens ein Plattenwärmeübertrager 30 zweiseitig offen asymmetrisch und mindestens ein anderer Plattenwärmeübertrager 30 vierseitig offen asymmetrisch ausgebildet. Die beiden verbleibenden zwei Plattenwärmeübertrager 30 können dann entweder beide oder gemischt entweder zweiseitig offen oder vierseitig offen ausgebildet sein.

Der besondere Vorteil in einer zweiseitig offenen oder einer vierseitig offenen Ausbildung der offenen asymmetrischen Plattenwärmeübertrager 30 liegt in einer zielgerichteten Beeinflussung der Strömungen der Stoffströme die es ermöglicht, die Lokalisierung einer Inertgaskonzentration zu beeinflussen und so die Voraussetzung für eine wirksame, insbesondere auch kontinuierliche Absaugung bereitzustellen.

Kennzeichnend ist gemäß einer hierauf aufbauenden Weiterbildung, dass die Inertgasabsaugleitung 19 im jeweiligen Plattenwärmeübertrager 30, in der Draufsicht gesehen, und wie in der Figur 8 dargestellt, mittig in den jeweiligen Platten des Plattenwärmeübertragers 30 angeordnet ist. Dadurch wird bewirkt, dass die Inertgase aus der Mitte genau und gezielt abgesaugt werden können.

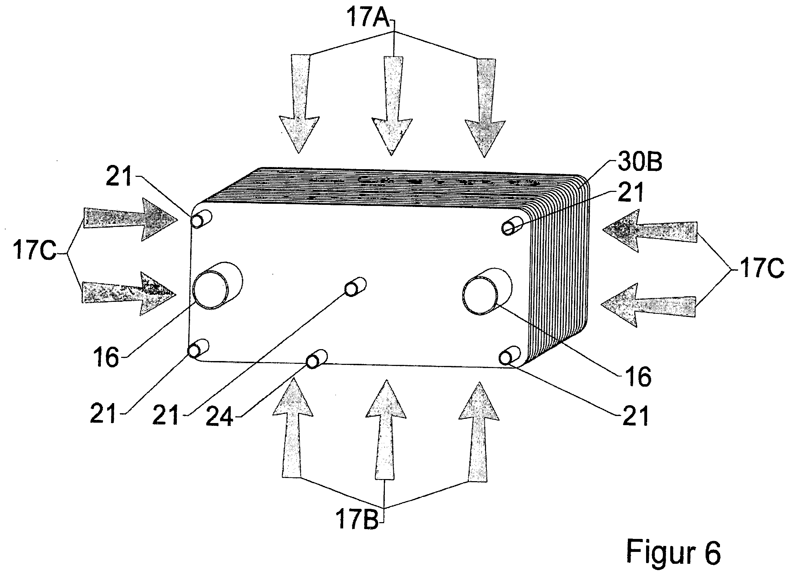

Ein weiteres Merkmal der Erfindung ist es in einer Weiterbildung, dass in einem Plattenwärmeübertrager 30 auch mehrere Inertgasabsaugleitungen 19 angeordnet sein können, die wie in den Figuren 4 und 6 dargestellt, in der Draufsicht gesehen, mittig und an den Ecken der Platten des Plattenwärmeübertragers 30 angeordnet sind. Diese erfindungsgemäße Bauform bewirkt, dass bei Plattenwärmeübertragern 30 mit hoher Plattenanzahl die Inertgasabsaugung wesentlich effektiver gestaltet wird.

Wie in der Figur 3, einer Schnittdarstellung der erfindungsgemäßen Wasser-Lithiumbromid-Absorptionskälteanlage in der Seitenansicht, und zudem im Detail in den Figuren 4 bis 7, und insbesondere in Figur 8 in einer Schnittdarstellung der Seitenansicht eines erfindungsgemäßen Plattenwärmeübertragers 30 dargestellt, ist erfindungswesentlich, dass in den Plattenwärmeübertragern 30 der erfindungsgemäßen Wasser-Lithiumbromid-Absorptionskälteanlage, und zwar in den im Niederdruckbehälter 2 angeordneten Plattenwärmeübertrager/n 30 des Absorbers 7, wie zudem auch in den im Hochdruckbehälter angeordneten Plattenwärmeübertrager/n 30 des Kondensators, Inertgasabsaugleitungen 19 mit Inertgasabsaugbohrungen 20 angeordnet sind.

Im kontinuierlichen Arbeitsprozess kann so erfindungsgemäß im Rahmen der Prozessführung gewährleistet werden, dass sowohl das in den Hochdruckbehälter 1 mit einem Arbeitsinnendruck von ca. 0,05 bar (absolut), als auch in den Niederdruckbehälter 2 einem Arbeitsinnendruck von ca. 0,01 bar (absolut) eingetretene Inertgas gezielt an den sich definiert ausbildenden Inertgasansammlungen 18 abgesaugt werden kann.

Konkret kann das in den Hochdruckbehälter 1 eingetretene Inertgas, welches sich in den jeweils eingesetzten Plattenwärmeübertragern 30 (je nach eingesetztem Plattenwärmeübertragertyp 30A oder 30B / wie in den Figuren 5 oder 7 dargestellt) im Kondensator anreichert, wie auch das in den Niederdruckbehälter 2 eingetretene Inertgas, welches sich in den jeweils eingesetzten Plattenwärmeübertragern 30 (je nach eingesetztem Plattenwärmeübertragertyp 30A oder 30B / wie in den Figuren 5 oder 7 dargestellt) im Absorber 7 anreichert, gezielt von diesen sich erfindungsgemäß definiert ausbildenden Inertgasansammlungen 18, mittels der erfindungsgemäß in den Plattenwärmeübertragern 30, wie in Figur 8 dargestellt, angeordneten Inertgasabsaugleitungen 19 mit ihren Inertgasabsaugbohrungen 20, über die an den Plattenwärmeübertragern 30 angeordneten Inertgasabsaugkanalanschlüssen 21, und dann über die in der Figur 3 dargestellten, an den Inertgasabsaugkanalanschlüsse 21 angeordneten, Inertgasleitungen 22 mittels mindestens einer Absaugvorrichtung 23 abgesaugt werden.

In einer anderen optimierten Bauform sammeln sich in Verbindung mit einer gezielten Strömungsführung im Kondensator, dies bedeutet mit definierter Dampfströmung "nur von oben nach unten" die Inertgase des Hochdruckbehälters 1 erfindungsgemäß im Bereich der Flüssigkeitsauffangwanne 9 des Kondensators 5 an und werden von dort in die Verbindungsleitung 11A mit der als Expansionsventil wirkenden Drossel 12A eingesaugt und über die Flüssigkeitsauffangwanne 9 des Verdampfers 6 in den Niederdruckbehälter 2 ausgetragen.
In Verbindung mit einer solchen definierten Strömungsführung im Niederdruckbehälter 2 werden dann alle in die Kälteanlage eintretenden Inertgase mit der Dampfströmung 17 mittransportiert. Sie sammeln sich dadurch konzentriert, dies bedeutet vor/hinter und zwischen den Platten des/der Plattenwärmeübertrager/s 30 im Absorber 7 an. Sie können dann von dort mittels der in diesem Fall nur in dem/den Plattenwärmeübertrager/n 30 des Absorbers 7, im Niederdruckbehälter 2, beispielsweise wie in Figur 8 dargestellt, angeordneten Inertgasabsaugleitungen 19 mit Inertgasabsaugbohrungen 20, zuverlässig aus diesem Bereich vor/hinter und zwischen den Platten der Plattenwärmeübertrager 30 des Absorbers 7, lokal und geometrisch exakt definiert, mit der Absaugvorrichtung 23 erfindungsgemäß abgesaugt werden.
Erfindungswesentlich ist auch, dass sich die Inertgasansammlungen 18 in ihrer Lage innerhalb des Plattenwärmeübertragers 30 je nach Ausführung des Plattenwärmeübertragers 30 unterscheiden.
So bilden sich in zweiseitig offenen Plattenwärmeübertragern 30A die Inertgasansammlungen 18 "zentral", wie in Figur 5 dargestellt, als Inertgassammlung 18A vor/hinter und zwischen den Platten des Plattenwärmeübertragers 30A aus.
Bei vierseitig offenen Plattenwärmeübertragern 30B bilden sich die Inertgasammlungen 18B im Gegensatz dazu "dezentral", wie in der Figur 7 dargestellt, vor/hinter und zwischen den Platten des Plattenwärmeübertragers 30B aus. Erfindungswesentlich ist auch, dass an jedem Plattenwärmeübertrager 30, wie in den Figuren 3 bis 8 dargestellt, unten ein Entleerungsanschluss 24 für die externe Medienseite angeordnet ist, welcher mittig oder versetzt von der Mitte platziert ist, wobei alle Entleerungsanschlüsse 24 über Entleerungsleitungen 25 verbunden sind, die in Entleerungsanschlussstutzen 26 münden, welche am Hochdruckbehälter 1 und am Niederdruckbehälter 2 angeordnet sind. Dadurch wird bewirkt, dass bei frostgefährdeten Aufstellungen der erfindungsgemäßen Wasser- Lithiumbromid-Absorptionskälteanlage die externen Wasserkreisläufe vollständig entleert werden können, so dass eine "Frostaufstellung" der Anlage möglich ist.
Erfindungsgemäß ist auch, dass die Beaufschlagung der offenen asymmetrischen Plattenwärmeübertrager 30 mit dem Arbeitsstoff mittels einer Berieselungsvorrichtung 8 in der Bauform von Düsen, oder wie in der Figur 8 dargestellt, in der Bauform eines Verteilerkastens mit einem Lochblech erfolgt. Dadurch wird bewirkt, dass die offenen Plattenwärmeübertrager 30 als Rieselfilmapparat arbeiten und dadurch eine gute Benetzung der Wärme- und Stoffübertragerflächen gewährleistet ist.

Mit der erfindungsgemäßen Lösung ist es somit gelungen eine Wasser-Lithiumbromid-Absorptionskälteanlage zu entwickeln, die mit geringem Materialeinsatz, geringem Gewicht, geringem Platzbedarf, in kompakter Bauform und bei deutlich reduziertem Fertigungs-, Montage- und Instandhaltungsaufwand eine hohe Kälteleistung gewährleistet, und dabei in speziellen Ausführungsformen ohne aufwendige technische Hilfsmittel das Problem der Inertgasanfälligkeit bei Wasser-Lithiumbromid-Absorptionskälteanlagen löst, und so mit minimalem Aufwand bei hoher Zuverlässigkeit eine hohe Anlagenverfügbarkeit, dies bedeutet einen ununterbrochenen Dauerbetrieb, bei hohem Anlagenwirkungsgrad, gewährleistet.

### Verwendete Bezugszeichen

- 1: Hochdruckbehälter
- 2: Niederdruckbehälter
- 3: Wärmeübertrager
- 4: Generator
- 5: Kondensator
- 6: Verdampfer
- 7: Absorber
- 8: Berieselungsvorrichtung
- 9: Flüssigkeitsauffangwanne
- 10: Rieselfilmapparat
- 11: Verbindungsleitung/Arbeitsstoff
- 11A: Verbindungsleitung/Arbeitsstoff
- 11B: Verbindungsleitung/Arbeitsstoff
- 11C: Verbindungsleitung/Arbeitsstoff
- 11D: Verbindungsleitung/Arbeitsstoff
- 12: Drossel
- 12A: Drossel
- 12B: Drossel
- 13: Pumpe
- 13C: Pumpe
- 13D: Pumpe
- 14: Lösungsmittelwärmeübertrager
- 15: Grundrahmen
- 16: Verbindungsstutzen
- 17: Dampfströmung
- 17A: Dampfströmung von oben
- 17B: Dampfströmung von unten
- 17C: Dampfströmung seitlich
- 18: Inertgasansammlung
- 18A: Inertgasansammlung
- 18B: Inertgasansammlung
- 19: Inertgasabsaugleitung
- 20: Inertgasabsaugbohrung
- 21: Inertgasabsaugkanalanschluss
- 22: Inertgasleitung
- 23: Absaugvorrichtung
- 24: Entleerungsanschluss
- 25: Entleerungsleitung
- 26: Entleerungsanschlussstutzen
- 27: Kaltwasserkreislauf
- 28: Warmwasserkreislauf
- 29: Rückkühlwasserkreislauf
- 30: Plattenwärmeübertrager
- 30A: Plattenwärmeübertrager, 2-seitig offen
- 30B: Plattenwärmeübertrager, 4-seitig offen
- 31: Schaltkasten

## Patentansprüche

1. Wasser-Lithiumbromid-Absorptionskälteanlage mit Medienanschlussleitungen für jeweils einen Warmwasser-, einen Rückkühl- und einen Kaltwasserkreislauf, mit einem innerhalb der Absorptionskälteanlage in einem Kreisprozess geführten, abhängig vom Kreisprozess in unterschiedlichen Mischungsverhältnissen eines Lösungsmittels und eines Kältemittels vorliegenden Arbeitsstoff, mit einem Hochdruckbehälter (1) in dem ein das Kältemittel unter Wärmezufuhr aus dem Lösungsmittel austreibenden Generator (4) mit einem ersten Wärmeübertrager (3), und ein das ausgetriebene Kältemittel kondensierenden Kondensator (5) mit einem zweiten Wärmeübertrager (3) angeordnet ist, und einem Niederdruckbehälter (2), in dem ein das Kältemittel unter Wärmeentzug verdampfender Verdampfer (6) mit einem dritten Wärmeübertrager (3), sowie ein Absorber (7) zur Absorption des im Verdampfer (6) verdampften Kältemitteldampfes im Lösungsmittel mit einem vierten Wärmeübertrager (3) angeordnet ist, mit oberhalb des Wärmeübertrager (3) des Generators (4) im Hochdruckbehälter (1), wie auch oberhalb der Wärmeübertrager (3) des Verdampfers (6) und auch des Absorbers (7) im Niederdruckbehälter (2) angeordneten Berieselungsvorrichtungen (8), wobei im Hochdruckbehälter (1), unterhalb des Wärmeübertragers (3) des Generators (4) und unterhalb des Wärmeübertragers (3) des Kondensators (5), wie auch im Niederdruckbehälter (2) unterhalb der Wärmeübertrager (3) des Verdampfers (6) und des Absorbers (7) Flüssigkeitsauffangwannen (9) so angeordnet sind, dass die jeweiligen Wärmeübertrager (3) gemeinsam mit der zugeordneten Berieselungsvorrichtung (8) und der zugeordneten Flüssigkeitsauffangwanne (9) jeweils einen Rieselfilmapparat (10) ausbilden, dabei ist zwischen der Flüssigkeitsauffangwanne (9) des Kondensators (5) im Hochdruckbehälter (1) und der Flüssigkeitsauffangwanne (9) des Verdampfers (6) in dem Niederdruckbehälter (2) eine Verbindungsleitung (11A) angeordnet, in der eine als Expansionsventil wirkende Drossel (12A) angeordnet ist, zudem ist zwischen dem Hochdruckbehälter (1) und dem Niederdruckbehälter (2) zwischen der Flüssigkeitsauffangwanne (9) des Generators (4) und der Berieselungsvorrichtung (8) des Absorbers (7) eine weitere Verbindungsleitung (11B) angeordnet, in der ebenfalls eine als Expansionsventil wirkende Drossel (12B) angeordnet ist, in einer weiteren Verbindungsleitung (11C), zwischen der Flüssigkeitsauffangwanne (9) des Absorbers (7), und der Berieselungsvorrichtung (8) des Generators (4) ist eine Pumpe (13C) angeordnet, wobei die Verbindungsleitung (11B) vorder Drossel (12B) mit der Verbindungsleitung (11C) über einen zwischen dem Hochdruckbehälter (1) und dem Niederdruckbehälter (2) angeordneten Lösungsmittelwärmeübertrager (14) thermisch gekoppelt ist, darüber hinaus ist zwischen der Flüssigkeitsauffangwanne (9) des Verdampfers (6) und der Berieselungsvorrichtung (8) des Verdampfers (6) am Niederdruckbehälter (2) eine weitere Verbindungsleitung (11D) mit einer weiteren Pumpe (13D) angeordnet,
**dadurch gekennzeichnet,**
**dass** alle Wärmeübertrager (3), also der Wärmeübertrager (3) des Generators (4), der Wärmeübertrager (3) des Kondensators (5), der Wärmeübertrager (3) des Verdampfers (6) und auch der Wärmeübertrager (3) des Absorbers (7), als offene asymmetrische Plattenwärmeübertrager (30) ausgebildet sind und dass die offenen asymmetrischen Plattenwärmeübertrager (30) als zweiseitig offene asymmetrische-Plattenwärmeübertrager (30A) oder vierseitig offene asymmetrische Plattenwärmeübertrager (30B) oder zum Teil als zweiseitig offene asymmetrische Plattenwärmeübertrager (30A) und zum anderen Teil als vierseitig offene asymmetrische Plattenwärmeübertrager (30B) ausgebildet sind.

2. Wasser-Lithiumbromid-Absorptionskälteanlage nach Anspruch 1,
**dadurch gekennzeichnet,**
**dass** in einem eckigen Grundrahmen (15) der Hochdruckbehälter (1), der Niederdruckbehälter (2) wie auch alle Verbindungsleitungen mit den in bzw. zwischen diesen angeordneten Bauteilen, wie Drosseln (12) oder Pumpen (13), angeordnet sind.

3. Wasser-Lithiumbromid-Absorptionskälteanlage nach einem der vorhergehenden Ansprüche,
**dadurch gekennzeichnet,**
**dass** mindestens in einem der Plattenwärmeübertrager (30), und zwar mindestens in dem im Niederdruckbehälter (2) angeordneten Plattenwärmeübertrager (30) des Absorbers (7), Inertgasabsaugleitungen (19) mit Inertgasabsaugbohrungen (20) zur Inertgasabführung des im Bereich vor/hinter und zwischen den Platten angereicherten Inertgases angeordnet sind, und dass die in den Plattenwärmeübertragern (30) angeordneten Inertgasabsaugleitungen (19) in einen Inertgasabsaugkanalanschluss (21) oder in mehrere Inertgasabsaugkanalanschlüsse (21) münden, und dass der Inertgasabsaugkanalanschluss (21) oder die Inertgasabsaugkanalanschlüsse (21) mittels einer oder mehreren Inertgasleitungen (22) mit mindestens einer Absaugvorrichtung (23) verbunden ist/sind.

4. Wasser-Lithiumbromid-Absorptionskälteanlage nach einem der vorhergehenden Ansprüche,
**dadurch gekennzeichnet,**
**dass** auch in dem im Hochdruckbehälter (1) angeordneten Plattenwärmeübertrager (30) des Kondensators (5) Inertgasabsaugleitungen (19) mit Inertgasabsaugbohrungen (20) zur Inertgasabführung des im Bereich vor/hinter und zwischen den Platten angereicherten Inertgases angeordnet sind, und dass die in den Plattenwärmeübertragern (30) angeordneten Inertgasabsaugleitungen (19) zumindest in einen Inertgasabsaugkanalanschluss (21) münden, und dass der Inertgasabsaugkanalanschluss (21) oder die
Inertgasabsaugkanalanschlüsse (21) mittels einer oder mehreren Inertgasleitungen (22) mit mindestens einer Absaugvorrichtung (23) verbunden ist/sind.

5. Wasser-Lithiumbromid-Absorptionskälteanlage nach einem der vorhergehenden Ansprüche,
**dadurch gekennzeichnet,**
**dass** die Querschnittsflächen der Inertgasabsaugleitung/en (19) kleiner als die Querschnittsflächen der Verbindungsleitung/en (11) bemessen sind.

6. Wasser-Lithiumbromid-Absorptionskälteanlage nach einem der vorhergehenden Ansprüche,
**dadurch gekennzeichnet,**
**dass** sowohl in einem zweiseitig offenen asymmetrischen Plattenwärmeübertrager (30A), als auch in einem vierseitig offenen asymmetrischen Plattenwärmeübertrager (30B) die Inertgasabsabsaugleitung (19) und der an der Inertgasäbsaugleitung (19) angeordnete Inertgasabsaugkanalanschluss (21), in der Draufsicht gesehen, mittig in den Platten des jeweiligen Plattenwärmeübertragers (30) angeordnet ist.

7. Wasser-Lithiumbromid-Absorptionskälteanlage nach einem der vorhergehenden Ansprüche,
**dadurch gekennzeichnet,**
**dass** sowohl in einem zweiseitig offenen asymmetrischen Plattenwärmeübertrager (30A), als auch in einem vierseitig offenen asymmetrischen Plattenwärmeübertrager (30B) mehrere Inertgasabsaugleitungen (19) mit jeweils einem der jeweiligen Inertgasabsaugleitung (19) zugeordneten Inertgasabsaugkanalanschluss (21), in der Draufsicht gesehen, mittig und/oder an den Ecken der Platten des jeweiligen Plattenwärmeübertragers (30) angeordnet sind.

8. Wasser-Lithiumbromid-Absorptionskälteanlage nach einem der vorhergehenden Ansprüche,
**dadurch gekennzeichnet,**
**dass** an den Plattenwärmeübertrager (30) unten ein Entleerungsanschluss (24) angeordnet ist, der mittig oder von der Mitte versetzt angeordnet ist, und der über Entleerungsleitungen (25) mit am Hochdruckbehälter (1) und/oder am Niederdruckbehälter (2) angeordneten Entleerungsanschlussstutzen (26) verbunden ist.

9. Wasser-Lithiumbromid-Absorptionskälteanlage nach einem der vorhergehenden Ansprüche,
**dadurch gekennzeichnet,**
**dass** die Beaufschlagung der offenen asymmetrischen Plattenwärmeübertrager (30) mit dem Arbeitsstoff mittels einer Berieselungsvorrichtung (8) in der Bauform von Düsen, oder in der Bauform eines Verteilerkastens mit einem Lochblech ausgebildet ist.

## Claims

1. A water-lithium bromide absorption chiller with medium connection lines for a hot water, a recooling and a cold water circuit, with a working substance guided in a cyclic process within the absorption chiller and provided in different mixing ratios of a solvent and a refrigerant depending on the cyclic process, with a high-pressure tank (1) in which a generator (4), which expels the refrigerant from the solvent with the supply of heat, is arranged with a first heat exchanger (3), and a condenser (5), which condenses the expelled refrigerant, is arranged with a second heat exchanger (3), and with a low-pressure tank (2) in which an evaporator (6), which evaporates the refrigerant by means of heat extraction, is arranged with a third heat exchanger (3), and an absorber (7), which absorbs the refrigerant vapour, being produced in the evaporator (6), in the solvent, is arranged with a fourth heat exchanger (3), with sprinkler systems (8) arranged above the heat exchanger (3) of the generator (4) in the high-pressure tank (1) and above the heat exchangers (3) of the evaporator (6) and also of the absorber (7) in the low-pressure tank (2), wherein in the high-pressure tank (1) below the heat exchanger (3) of the generator (4) and below the heat exchanger (3) of the condenser (5), as well as in the low-pressure tank (2) below the heat exchangers (3) of the evaporator (6) and of the absorber (7), liquid collecting trays (9) are arranged in such a way that each of the corresponding heat exchangers (3) forms a falling film apparatus (10) together with the associated sprinkler system (8) and the associated liquid collecting tray (9), and a connection line (11A), equipped with a throttle (12A) acting as an expansion valve, is arranged between the liquid collecting tray (9) of the condenser (5) in the high-pressure tank (1) and the liquid collecting tray (9) of the evaporator (6) in the low-pressure tank (2), and in addition, a further connection line (11B), also equipped with a throttle (12B) acting as an expansion valve, is arranged between the high-pressure tank (1) and the low-pressure tank (2) between the liquid collecting tray (9) of the generator (4) and the sprinkler system (8) of the absorber (7), and a pump (13C) is arranged in a further connection line (11C) between the liquid collecting tray (9) of the absorber (7) and the sprinkler system (8) of the generator (4), wherein the connection line (11B) is thermally coupled to the connection line (11C) via a solvent heat exchanger (14) arranged upstream the throttle (12B) between the high-pressure tank (1) and the low-pressure tank (2), moreover, a further connection line (11D) is arranged with a further pump (13D) between the liquid collecting tray (9) of the evaporator (6) and the sprinkler system (8) of the evaporator (6) in the low-pressure tank (2),
**characterized in**
**that** all heat exchangers (3), i.e. the heat exchanger (3) of the generator (4), the heat exchanger (3) of the condenser (5), the heat exchanger (3) of the evaporator (6), and also the heat exchanger (3) of the absorber (7) are constructed as open asymmetrical plate heat exchangers (30), and that the open asymmetrical plate heat exchangers (30) are designed as asymmetrical plate heat exchangers (30A) open on two sides or as asymmetrical plate heat exchangers (30B) open on four sides or partly as asymmetrical plate heat exchangers (30A) open on two sides and partly as asymmetrical plate heat exchangers (30B) open on four sides.

2. The water-lithium bromide absorption chiller according to claim 1,
**characterized in**
**that** the high-pressure tank (1), the low-pressure tank (2), and all connection lines with the components, such as throttles (12) or pumps (13) provided in or between them, are arranged in an angular base frame (15).

3. The water-lithium bromide absorption chiller according to one of the previous claims,
**characterized in**
**that** inert gas extraction lines (19) with inert gas extraction bores (20) are arranged in at least one of the plate heat exchangers (30), particularly at least in the plate heat exchanger (30) of the absorber (7) contained in the low-pressure tank (2) and are used for the extraction of the inert gas enriched in the area in front of/behind and between the plates, and that the inert gas extraction lines (19) arranged in the plate heat exchangers (30) lead to one inert gas extraction duct connection (21) or to more inert gas extraction duct connections (21), and that the inert gas extraction duct connection (21) or the inert gas extraction duct connections (21) is/are connected to at least one extraction unit (23) by means of one or more inert gas line/s (22).

4. The water-lithium bromide absorption chiller according to one of the previous claims,
**characterized in**
**that**, for the extraction of the inert gas enriched in the area in front of/behind and between the plates, inert gas extraction lines (19) with inert gas extraction bores (20) are also arranged in the plate heat exchanger (30) of the condenser (5) contained in the high-pressure tank (1), and that the inert gas extraction lines (19) arranged in the plate heat exchangers (30) lead to at least one inert gas extraction duct connection (21), and that the inert gas extraction duct connection (21) or the inert gas extraction duct connections (21) is/are connected to at least one extraction unit (23) by means of one or more inert gas line/s (22).

5. The water-lithium bromide absorption chiller according to one of the previous claims,
**characterized in**
**that** the cross-sectional area/s of the inert gas extraction line/s (19) is/are dimensioned such that it is/they are smaller than the cross-sectional area/s of the connection line/s (11).

6. The water-lithium bromide absorption chiller according to one of the previous claims,
**characterized in**
**that**, in top view, both in an asymmetrical plate heat exchanger (30A) open on two sides and in an asymmetrical plate heat exchanger (30B) open on four sides, the inert gas extraction line (19) and the inert gas extraction duct connection (21) provided at the inert gas extraction line (19) are arranged centrally in the plates of the corresponding plate heat exchanger (30).

7. The water-lithium bromide absorption chiller according to one of the previous claims,
**characterized in**
**that**, in top view, both in an asymmetrical plate heat exchanger (30A) open on two sides and in an asymmetrical plate heat exchanger (30B) open on four sides, several inert gas extraction lines (19), each having an inert gas extraction duct connection (21) assigned to the corresponding inert gas extraction line (19), are arranged centrally and/or at the corners of the plates of the corresponding plate heat exchanger (30).

8. The water-lithium bromide absorption chiller according to one of the previous claims,
**characterized in**
**that** the bottom of the plate heat exchanger (30) is equipped with a drain connection (24) which is arranged centrally or offset from the centre and is connected via drain lines (25) to drain connection nozzles (26) arranged at the high-pressure tank (1) and/or at the low-pressure tank (2).

9. The water-lithium bromide absorption chiller according to one of the previous claims,
**characterized in**
**that** the working substance is applied to the open asymmetrical plate heat exchangers (30) by means of a sprinkler system (8) which is provided in the design of nozzles or in the design of a distributor box with a perforated plate.

## Revendications

1. Installation frigorifique à absorption eau-bromure de lithium avec des conduites de raccordement de fluides respectivement pour un circuit d'eau chaude, un circuit réfrigérant de retour et un circuit d'eau froide, avec un agent qui est conduit dans un processus cyclique à l'intérieur de l'installation frigorifique à absorption et qui est présent dans différents rapports de mélange d'un solvant et d'un réfrigérant en fonction du processus cyclique, avec un réservoir à haute pression (1) dans lequel sont disposés un générateur (4) avec un premier échangeur de chaleur (3) qui expulse le fluide frigorigène du solvant avec apport de chaleur et un condenseur (5) avec un deuxième échangeur de chaleur (3) qui condense le réfrigérant expulsé, et un réservoir à basse pression (2) dans lequel est disposé un évaporateur (6) avec un troisième échangeur de chaleur (3) qui évapore le réfrigérant avec extraction de chaleur, et un absorbeur (7) pour absorber la vapeur de réfrigérant évaporée dans le solvant dans l'évaporateur (6) est disposé avec un quatrième échangeur de chaleur (3), avec des dispositifs d'arrosage (8) disposés au-dessus de l'échangeur de chaleur (3) du générateur (4) dans le réservoir à haute pression (1), ainsi qu'au-dessus des échangeurs de chaleur (3) de l'évaporateur (6) et également de l'absorbeur (7) dans le réservoir à basse pression (2), dans lequel des bacs collecteurs de liquide (9) sont disposés dans le réservoir à haute pression (1), sous l'échangeur de chaleur (3) du générateur (4) et sous l'échangeur de chaleur (3) du condenseur (5), ainsi que dans le réservoir à basse pression (2) sous les échangeurs de chaleur (3) de l'évaporateur (6) et de l'absorbeur (7), en ce que les échangeurs de chaleur respectifs (3) forment, avec le dispositif d'arrosage (8) associé et le bac collecteur de liquide (9) associé, un dispositif à film ruisselant (10), une conduite de raccordement (11A) étant disposée entre le bac collecteur de liquide (9) du condenseur (5) dans le réservoir à haute pression (1) et le bac collecteur de liquide (9) de l'évaporateur (6) dans le réservoir à basse pression (2), dans lequel est disposé un étrangleur (12A) fonctionnant comme soupape de détente, en outre, une autre conduite de raccordement (11B) est disposée entre le réservoir à haute pression (1) et le réservoir à basse pression (2) entre le bac collecteur de liquide (9) du générateur (4) et le dispositif d'arrosage (8) de l'absorbeur (7), dans laquelle est également disposé un étrangleur (12B) fonctionnant comme soupape de détente, une pompe (13C) est disposée dans une autre conduite de raccordement (11C), entre le bac collecteur de liquide (9) de l'absorbeur (7) et le dispositif d'arrosage (8) du générateur (4), dans lequel la conduite de raccordement (11B) en amont de l'étrangleur (12B) est couplée thermiquement à la conduite de raccordement (11C) par l'intermédiaire d'un échangeur de chaleur de solvant (14) disposé entre le réservoir à haute pression (1) et le réservoir à basse pression (2), en outre, une autre conduite de raccordement (11D) avec une autre pompe (13D) est disposée entre le bac collecteur de liquide (9) de l'évaporateur (6) et le dispositif d'arrosage (8) de l'évaporateur (6) sur le réservoir à basse pression (2),
est **caractérisé en ce**
**que** tous les échangeurs de chaleur (3), c'est-à-dire l'échangeur de chaleur (3) du générateur (4), l'échangeur de chaleur (3) du condenseur (5), l'échangeur de chaleur (3) de l'évaporateur (6) et aussi l'échangeur de chaleur (3) de l'absorbeur (7), sont conçus comme des échangeurs de chaleur à plaques asymétriques ouverts (30) et que les échangeurs de chaleur à plaques asymétriques ouverts (30) sont conçus comme des échangeurs de chaleur à plaques asymétriques (3OA) ouverts sur deux côtés ou des échangeurs de chaleur à plaques asymétriques (30B) ouverts sur quatre côtés ou partiellement comme des échangeurs de chaleur à plaques asymétriques (30A) ouverts sur deux côtés et partiellement comme des échangeurs de chaleur à plaques asymétriques (30B) ouverts sur quatre côtés.

2. Installation frigorifique à absorption eau-bromure de lithium suivant l'une quelconque des revendications précédentes,
est **caractérisée en ce**
**que** le réservoir à haute pression (1), le réservoir à basse pression (2) ainsi que toutes les conduites de raccordement avec les composants disposés dans ou entre eux, tels que les étrangleurs (12) ou les pompes (13), sont disposés dans un cadre de base (15) angulaire.

3. Installation frigorifique à absorption eau-bromure de lithium suivant l'une quelconque des revendications précédentes,
est **caractérisée en ce**
**que** des conduites d'aspiration de gaz inerte (19) avec des trous d'aspiration de gaz inerte (20) sont disposées dans au moins un des échangeurs de chaleur à plaques (30), en particulier au moins dans l'échangeur de chaleur à plaques (30) de l'absorbeur (7) disposé dans le réservoir à basse pression (2), pour l'extraction du gaz inerte enrichi dansla zone devant / derrière et entre les plaques, et que les conduites d'aspiration de gaz inerte (19) disposées dans les échangeurs de chaleur à plaques (30) débouchent dans un ou plusieurs raccords de canal d'aspiration de gaz inerte (21), et que le raccord de conduite d'aspiration de gaz inerte (21) ou les raccords de canal d'aspiration de gaz inerte (21) est / sont relié(s) à au moins un dispositif d'aspiration (23) au moyen d'une ou plusieurs conduites de gaz inerte (22).

4. Installation frigorifique à absorption eau-bromure de lithium suivant l'une quelconque des revendications précédentes,
est **caractérisée en ce**
**que** des conduites d'aspiration de gaz inerte (19) avec des trous d'aspiration de gaz inerte (20) sont disposées dans l'échangeur de chaleur à plaques (30) du condenseur (5) disposé dans le réservoir à haute pression (1), pour l'extraction du gaz inerte enrichi dans la zone devant / derrière et entre les plaques, et que les conduites d'aspiration de gaz inerte (19) disposées dans les échangeurs de chaleur à plaques (30) débouchent au moins dans un raccord de canal d'aspiration de gaz inerte (21), et que le raccord de conduite d'aspiration de gaz inerte (21) ou les raccords de canal d'aspiration de gaz inerte (21) est / sont relié(s) à au moins un dispositif d'aspiration (23) au moyen d'une ou plusieurs conduites de gaz inerte (22).

5. Installation frigorifique à absorption eau-bromure de lithium suivant l'une quelconque des revendications précédentes,
est **caractérisée en ce**
**que** les surfaces de section transversale de la ou des conduites d'aspiration de gaz inerte (19) sont plus petites que les surfaces de section transversale de la ou les conduites de raccordement (11).

6. Installation frigorifique à absorption eau-bromure de lithium suivant l'une quelconque des revendications précédentes,
est **caractérisée en ce**
**que** tant dans un échangeur de chaleur à plaques asymétrique (30A) ouvert sur deux côtés que dans un échangeur de chaleur à plaques asymétrique (30B) ouvert sur quatre côtés, la conduite d'aspiration de gaz inerte (19) et le raccord de conduite d'aspiration de gaz inerte (21) disposé sur la conduite d'aspiration de gaz inerte (19) sont disposés, vu en plan, de manière centrale dans les plaques de l'échangeur de chaleur à plaques (30) respectif.

7. Installation frigorifique à absorption eau-bromure de lithium suivant l'une quelconque des revendications précédentes,
est **caractérisée en ce**
**que**, tant dans un échangeur de chaleur à plaques asymétrique (30A) ouvert sur deux côtés que dans un échangeur de chaleur à plaques asymétrique (30B) ouvert sur quatre côtés, plusieurs conduites d'aspiration de gaz inerte (19), chacune avec un raccord de conduite d'aspiration de gaz inerte (21) associé à la conduite d'aspiration de gaz inerte (19) respective, sont disposées, vu en plan, au centre et/ou aux coins des plaques de l'échangeur de chaleur à plaques (30) respectif.

8. Installation frigorifique à absorption eau-bromure de lithium suivant l'une quelconque des revendications précédentes,
est **caractérisée en ce**
**qu'**un raccord de vidange (24) est disposé au fond de l'échangeur de chaleur à plaques (30), lequel raccord de vidange (24) est disposé de manière centrale ou décalée par rapport au centre et est relié par des conduites de vidange (25) à des tubulures de vidange (26) disposées sur le réservoir à haute pression (1) et/ou sur le réservoir à basse pression (2).

9. Installation frigorifique à absorption eau-bromure de lithium suivant l'une quelconque des revendications précédentes,
est **caractérisée en ce**
**que** l'alimentation de l'agent aux échangeurs de chaleur à plaques asymétriques ouverts (30) s'effectue au moyen d'un dispositif d'arrosage (8) sous forme de buses ou sous forme d'une boîte de distribution avec une plaque perforée.
